Europäisches Patentamt

European Patent Office

Office européen des brevets

(19)

(11) Veröffentlichungsnummer: **0 195 281**
**B1**

(12) **EUROPÄISCHE PATENTSCHRIFT**

(45) Veröffentlichungstag der Patentschrift: **16.01.91**

(51) Int. Cl.⁵: **G 06 K 9/46**

(21) Anmeldenummer: **86102506.2**

(22) Anmeldetag: **26.02.86**

(54) **Schaltungsanordnung für die Bildverarbeitung.**

(30) Priorität: **16.03.85 DE 3509508**

(43) Veröffentlichungstag der Anmeldung:
**24.09.86 Patentblatt 86/39**

(45) Bekanntmachung des Hinweises auf die
Patenterteilung:
**16.01.91 Patentblatt 91/03**

(84) Benannte Vertragsstaaten:
**DE FR GB IT NL SE**

(56) Entgegenhaltungen:
**GB-A-1 311 671**
**US-A-4 183 013**

(73) Patentinhaber: **Bodenseewerk Gerätetechnik
GmbH
Alte Nussdorfer Strasse 15 Postfach 1120
D-7770 Überlingen/Bodensee (DE)**

(72) Erfinder: **Uihlein, Christoph, Dr.
Strandweg 39
D-7770 Überlingen (DE)**

(74) Vertreter: **Weisse, Jürgen, Dipl.-Phys. et al
Patentanwälte Dipl.-Phys. Jürgen Weisse Dipl.-
Chem. Dr. Rudolf Wolgast Bökenbusch 41
Postfach 11 03 86
D-5620 Velbert 11 Langenberg (DE)**

Courier Press, Leamington Spa, England.

**Beschreibung**

Die Erfindung betrifft eine Schaltungsanordnung für die Objekterkennung aus einem aus Zeilen und Spalten zusammengesetzten Binärbild, wobei den Bildelementen geometrische oder physikalische Größen zugeordnet sind und diese Größen über die Flächen des Objekts hinweg aufsummiert werden, und wobei die Summation Zahlenwerte ergibt, die als Merkmal des Objekts einer Zuordnung des Objekts zu einer Klasse von Objekten dienen.

Es geht dabei um folgendes: Es wird ein zweidimensionales Bild beispielsweise auf einem photoelektrischen Mosaikdetektor erzeugt. Der Detektor hat Zeilen und Spalten, so daß jedes Detektorelement durch die Angabe seiner Zeile und seiner Spalte definiert ist. Je nachdem, ob die an einem bestimmten Detektorelement wirksame Bildhelligkeit einen vorgegebenen Schwellwert überschreitet oder nicht, wird dem Detektorelement ein Zustand "logisch 1" oder "logisch 0" zugeordnet. Das Bild wird somit reduziert zu einem zweidimensionalen Muster von logischen Zuständen, einem "Binärbild". Ein solches Binärbild kann mehrere getrennte Objekte enthalten. Bei der Bildverarbeitung gilt es zunächst, diese getrennten Objekte voneinander zu unterscheiden, also festzustellen, welche in den logischen Zustand "1" gesetzten Bildpunkte zu diesem Objekt gehören. Das bezeichnet man als "Segmentation". Als nächstes wird ein so segmentiertes Objekt analysiert. Ein bekanntes Verfahren zur die Erkennung eines Objektes besteht darin, bestmmte Größen über die Bildpunkte des Objekts zu summieren. Diese Summation ergibt Zahlenwerte, die als Merkmale des Objektes eine Identifizierung ermöglichen, zu welcher Klasse das Objekt gehört. Die Merkmale können rein geometrischer Natur sein, beispielsweise Fläche, Schwerpunkt oder Trägheitsmoment. Es kann sich aber auch um die Aufsummierung physikalischer Größen, insbesondere der erfaßten und abgespeicherten Grauwerte des Bildes handeln. Es können so als Merkmale des Objektes beispielsweise die mittlere Helligkeit oder die Varianz der Helligkeit des Objektes bestimmt werden.

Eine weitere Aussage über das Objekt kann man gewinnen, wenn Binärbilder unter Verwendung verschiedener Schwellwerte erzeugt werden, wenn also beispielsweise die Grenze der Bildhelligkeit, bei welcher ein Bildpunkt auf "1" gesetzt wird, nach oben verschoben wird. Es kann dann ein zusammenhängendes Objekt unter Umständen in mehrere Einzelobjekte zerfallen. Das würde bedeuten, daß es sich um ein Objekt handelt, das mehrere hellere Bereiche aufweist.

Bei der Segmentation wird jeder Bildpunkt mit den benachbarten Bildpunkten verglichen. Ausgehend von einem Segmentationskeim, also einem Bildpunkt, der als zu dem zu untersuchenden Objekt gehörig festgestellt ist, wird geprüft, ob ein betrachteter Bildpunkt mit dem Segmentationskeim in einer Nachbarschaftsbeziehung steht, also an den Segmentationskeim angrenzt. Ein solcher Bildpunkt wird dem Objekt zugeordnet. Weitere Bildpunkte werden daraufhin untersucht, ob sie mit dem Segmentationskeim oder mit solchen zugeordneten Bildpunkten in einer Nachbarschaftsbeziehung stehen. Auf diese Weise können alle Bildpunkte erfaßt werden, die zu einem durch den Segmentationskeim definierten Objekt gehören. Diese geschieht üblicherweise in der Form, daß mittels eines entsprechend programmierten Rechners jeder Bildpunkt einzeln auf das Bestehen solcher Nachbarschaftsbeziehungen untersucht wird.

Wenn auf diese Weise ein Objekt segmentiert ist, gilt es, charakteristische Merkmale dieses Objekts zu ermitteln. Dies geschieht bekanntermaßen in der Form, daß für jeden dem Objekt zugeordneten Bildpunkte die zur Bildung des Merkmals benutzte Größe abgefragt und über alle diese Bildpunkte aufsummiert wird. Auch das geschieht üblicherweise mittels eines entsprechend programmierten Rechners.

Die US—A—4 183 013, zum Beispiel, befaßt sich mit der Erkennung von gegebenenfalls unregelmäßig geformten Objekten. Dabei werden bei der zeilenweisen Abtastung die Objektgrenzen erfaßt, also der Übergang von einem hellen zu einem dunkeln Gebiet oder von einem Gebiet mit Nullen zu einem Gebiet mit Einsen. Die Randpunkte aufeinanderfolgender Zeilen werden nach bestimmten Kriterien daraufhin überprüft, ob sie zu der gleichen Randlinie gehören. Nach anderen Kriterien werden bestimmte Grundmuster der Randlinien erkannt. Aus diesen Grundmistern werden bestimmte Typen von Objekten und deren Anzahl identifiziert.

Nach der Lehre der US—A—4 183 013 geschieht dies durch ein Rechnerprogramm.

Die US—A—4 183 013 erfaßt auch andere Daten der untersuchten Objekte, beispielsweise den Umfang, die Fläche, das Verhältnis des Quadrats des Umfangs zur Fläche und die Trägheitsmomente in X- und Y-Richtung. Dies geschieht jedoch nicht durch Speicherung von Partialsummen, sondern durch Berechnung aus den Koordinaten der Randpunkte (vgl. Spalte 3, Zeilen 27 bis 32 und Spalte 12, Zeile 51 bis Spalte 13, Zeile 35 der Druckschrift).

Die beschriebene Bildverarbeitung mit einem programmierten Rechner, bei welchem die Bildpunkte einzeln nach einem bestimmten Algorithmus untersucht werden, erfordert eine nicht unerhebliche Rechenzeit, die in manchen Fällen nicht zur Verfügung steht. Beispiele hierfür sind intelligente Suchköpfe für zielsuchende Flugkörper.

Der Erfindung liegt die Aufgabe zugrunde, bei einer Schaltungsanordnung der eingangs genannten Art die für die Bildverarbeitung erforderliche Zeit zu verkürzen.

Erfindungsgemäß wird diese Aufgabe gelöst durch

(a) ein erstes Register, in welchem die Bildinformationen einer zu verarbeitenden Zeile des Binärbildes speicherbar sind,

(b) eine festverdrahtete Logikschaltung mit einer Folge von Eingängen, die mit je einem Speicherplatz des ersten Registers verbunden sind, und einer Folge von den Eingängen zugeordneten Ausgängen, bei welcher die Eingänge und die Ausgänge über logische Operationen zur Bestimmung derjenigen Bildelemente miteinander verknüpft sind, welche die Kontur des der Bildinformation zugehörigen Objekts begrenzen,

(c) ein zweites Register, dessen Speicherplätze mit je einem der Ausgänge der Logikschaltung verbunden sind,

(d) ein Speicher, in welchem für jedes betrachtete Bildelement die Partialsumme einer der besagten Größen über die Bildelemente der zugehörigen Zeile von einem Rand des Bildes bis zu dem betrachteten Bildelement gespeichert ist, und

(e) Additionsmittel zum Addieren der den konturenbegrenzenden Bildelementen aus dem zweiten Register zugeordneten, gespeicherten Partialsummen für jede Zeile mit innerhalb einer Zeile bei jedem konturenbegrenzenden Bildelement wechselndem Vorzeichen.

Mit einer solchen Anordnung ergibt sich eine wesentliche Verkürzung der für die Bildverarbeitung insgesamt erforderlichen Zeit. Es steht dadurch mehr Zeit für die intelligente Auswertung der erhaltenen Bildinformationen zur Verfügung. Trotzdem können auf diese Weise auch schnell veränderliche Objekte erfaßt und verfolgt werden.

Die Erfindung kann mit geringstmöglichem Aufwand dadurch verwirklicht werden, daß

(a) die Logikschaltung eine zweite Folge von Ausgängen aufweist,

(b) an der besagten, ersten, Folge von Ausgängen durch die Logikschaltung ein von einem ersten Rand des Bildes her gesehen konturenbegrenzendes Bildelement zur Speicherung in dem zweiten Register durch ein binäres Signal markierbar ist,

(c) an der zweiten Folge von Ausgängen ausgehend von dem konturenbegrenzenden Bildelement auf der dem ersten Rand zugehörigen Seite der Zeile kein objektanzeigendes Signal auftritt und auf der dem zweiten Rand des Bildes zugehörigem Seite an jedem Ausgang der zweiten Folge von Ausgängen jeweils ein zu dem Signal an dem betreffenden Eingang inverses Signal auftritt,

(d) ein drittes Register vorgesehen ist, dessen Speicherstellen mit den Ausgängen der zweiten Folge von Ausgängen der Logikschaltung verbunden sind, und

(e) der Inhalt des dritten Registers in einem weiteren Bildverarbeitungszyklus in das erste Register übertragbar ist, so daß an den ersten Ausgängen und in dem zweiten Register das von der dem zweiten Rand des Bildes zugehörigen Seite her konturenbegrenzende Bildelement markiert wird.

Es wird dann ein und dieselbe Logikschaltung benutzt, um abwechselnd "rechte" und "linke" Ränder des Objekts zu ermitteln.

Ein Ausführungsbeispiel der Erfindung ist nachstehend unter Bezugnahme auf die zugehörigen Zeichnungen näher erläutert:

Fig. 1 zeigt ein typisches Binärbild mit drei getrennten Objekten, das durch eine Bildverarbeitung ausgewertet werden soll.

Fig. 2 zeigt eine Logikschaltung, die zur Bestimmung der Randpunkte eines Objekts verwendbar ist.

Fig. 3 veranschaulicht anhand des Inhalts der verschiedenen Register einen ersten Schritt zur Bestimmung eines Randes des Objekts.

Fig. 4 ist eine Darstellung ähnlich Fig. 3 und veranschaulicht einen zweiten Schritt zur Bestimmung eines anderen Randes des Objekts.

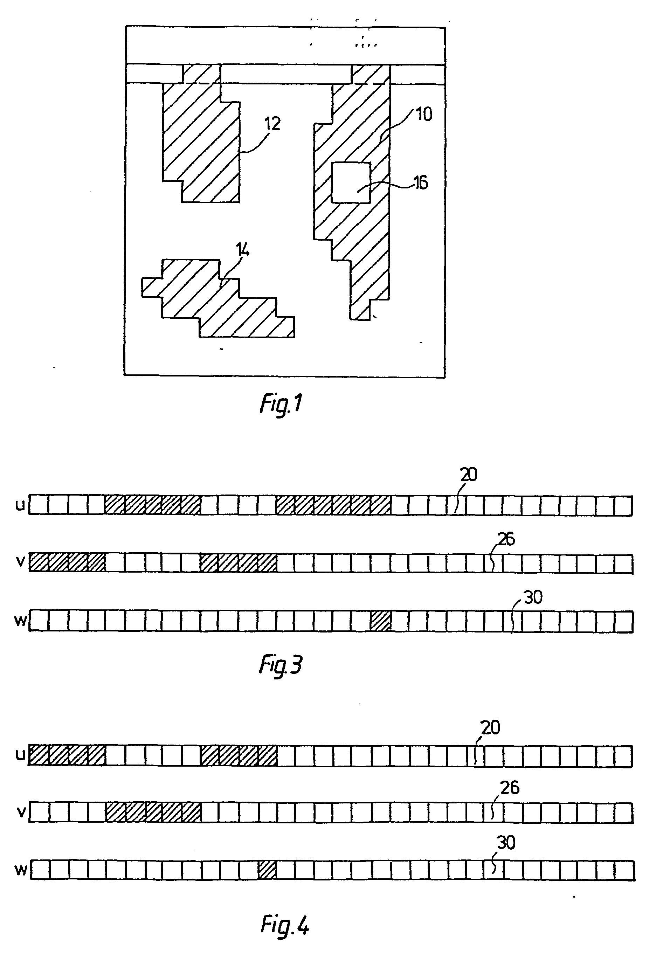

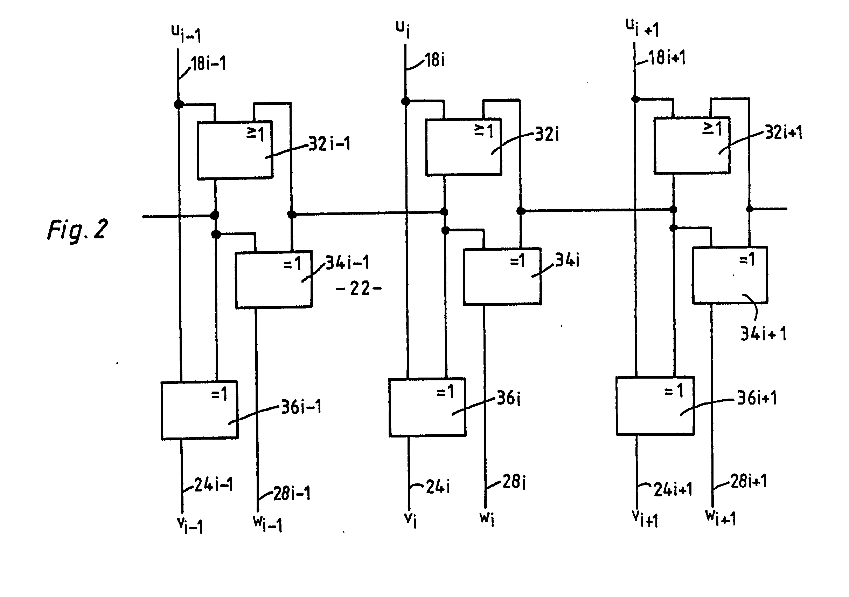

Fig. 1 zeigt ein typisches Binärbild mit drei getrennten Objekten 10, 12 und 14. Dieses Binärbild ist dadurch entstanden, daß Helligkeitswerte der einzelnen Bildelemente daraufhin untersucht wurden, ob sie oberhalb oder unterhalb eines vorgegebenen Schwellwerts liegen. Wenn der Helligkeitswert eines Bildelements oberhalb des Schwellwerts lag, wurde ihm der Zustand logisch "1" zugeordnet. Lag der Helligkeitswert unterhalb des Schwellwerts, wurde dem Bildelement der Zustand logisch "0" zugeordnet. Die Matrix, in welcher jedes Bildelement durch einen Zeilen- und einen Spaltenindex definiert ist, ist in einem Speicher abgespeichert. In Fig. 1 symbolisieren die gestrichelt dargestellten Flächen die Bildelemente, denen eine logische "1" zugeordnet ist. Die drei Objekte 10, 12 und 14 sind jeweils topologisch zusammenhängende Gebiete. In Fig. 1 ist das topologische Objekt 10 mit einem "Loch" 16 versehen, also mit einem Gebiet, in welchem den Bildelementen der Zustand "0" zugeordnet ist, das aber von Bildelementen mit dem Zustand logisch "1" vollständig umgeben ist. Es werden dann die einzelnen Objekte 10, 12 und 14 segmentiert, d.h. nacheinander alle Bildelemente erfaßt, die zu dem Objekt 10 gehören, dann alle Bildelemente, die zu dem Objekt 12 gehören und schließlich alle Bildelemente, die zu dem Objekt 14 gehören. Zu diesem Zweck muß ein Segmentationskeim gefunden werden, also ein Bildelement, das zu einem der Objekte gehört. Ausgehend von diesem Segmentationskeim werden dann alle anderen Bildelemente daraufhin untersucht, ob sie mit dem Segmentationskeim direkt durch eine Nachbarschaftsbeziehung verbunden sind oder indirekt über andere miteinander und mit dem Segmentationskeim durch Nachbarschaftsbeziehungen verbundene Bildelemente.

Die Segmentation ist nicht Gegenstand der vorliegenden Erfindung und daher hier nicht im einzelnen beschrieben. Eine besonders vorteilhafte Art der Segmentation ist Gegenstand einer gleichzeitig eingereichten europäischen Patentanmeldung der gleichen Anmelderin ("Schaltungsanordnung zur Segmentation eines Binärbildes", EP—A—0 195 283). Von einem so segmentierten Objekt werden die Randpunkte bestimmt.

Fig. 2 zeigt einen Teil einer Logikschaltung zur Bestimmung der Randpunkte. Man kann sich vorstellen, daß sich die in Fig. 2 dargestellte Schaltung in gleicher Weise nach rechts und nach links fortsetzen. Die Schaltung hat Eingänge ...18i−1, 18i, 18i+1..., die mit je einem Speicherelement eines "u"-Registers verbunden sind, das in Fig. 3 schematisch angedeutet und mit 20 bezeichnet ist. Die festverdrahtete Logikschaltung, die generell mit 22 bezeichnet ist, weist einen Satz von ersten Schaltungsausgängen . . . 24i−1, 24i, 24i+1 . . . auf. Diese Ausgänge sind mit je einer Speicherstelle . . . $v_{i-1}$, $v_i$, $v_{i+1}$ . . . eines "v"-Registers verbunden, das in Fig. 3 mit 26 bezeichnet ist. Die Logikschaltung 22 weist weiterhin einen zweiten Satz von Ausgängen . . . 28i−1, 28i, 28i+1 . . . auf. Jeder dieser Ausgänge ist mit einer Speicherstelle . . . $w_{i-1}$, $w_i$, $w_{i+1}$ . . . eines "w"-Registers verbunden, das in Fig. 3 mit 30 bezeichnet ist. Jedem Eingang . . . 18i−1, 18i, 18i+1 . . . ist ein ODER-Glied . . . 32i−1, 32i, 32i+1 zugeordnet. Weiterhin sind jedem Eingang ein erstes Exklusiv-ODER-Glied . . . 34i−1, 34i, 34i+1 . . . sowie ein zweites Exklusiv-ODER-Glied . . . 36i−1, 36i, 36i+1 . . . zugeordnet.

Die Schaltung der einzelnen logischen Glieder wird nachstehend anhand der dem Eingang 18i zugeordneten logischen Glieder 32i, 34i und 36i erläutert. Die Schaltung der den anderen Eingängen zugeordneten logischen Glieder ist entsprechend. Der Eingang 18i liegt an einem Eingang des ODER-Glieds 32i. an. An dem anderen Eingang des ODER-Glieds 32i liegt der Ausgang des rechts in Fig. 2 davon angeordneten, dem Eingang 18i+1 zugeordneten ODER-Glieds 32i+1. Dementsprechend liegt der Ausgang des ODER-Glieds 32i an einem Eingang des ODER-Glieds 32i−1, das dem Eingang 18i−1 zugeordnet ist. Es sei angenommen, daß der Eingang 18i im Zustand "1" ist, während alle rechts von dem Eingang 18i liegenden Eingänge 18i+1 . . . im logischen Zustand "0" seien. Es ist leicht einzusehen, daß in diesem Falle der Ausgang des ODER-Glieds 32i im Zustand "1" ist und ebenso die Ausgänge aller links von dem ODER-Glied 32i liegenden ODER-Glieder, und zwar unabhängig davon, welche logischen Zustände an den links von dem Eingang 18i liegenden Eingängen 18i−1 . . . herrschen. Der Zustand logisch "1" am Ausgang des ODER-Glieds 32i überträgt sich kaskadenartig über die jeweils rechten Eingänge der ODER-Glieder 32i−1 usw. auf die ODER-Glieder nach links in Fig. 2. Die Ausgänge der rechts von dem ODER-Glied 32i liegenden ODER-Glieder 32i+1 . . . sind null, dan angenommen war, daß die Eingänge 18i+1 . . . rechts von dem Eingang 18i im Zustand logisch "0" seien. Es werden also alle ODER-Glieder . . . 32i−1, 32i mit ihrem Ausgang in den Zustand logisch "1" gebracht bis zu demjenigen ODER-Glied 32i, das dem am weitesten rechts liegenden Eingang 18i des "u"-Registers 20 zugeordnet ist, der im Zustand logisch "1" ist.

Der Ausgang des ODER-Glieds 32i und der Eingang 18i liegen an den Eingängen eines Exklusiv-ODER-Gliedes 36i an, dessen Ausgang den Ausgang 24i zu dem "v"-Register 26 bildet. Rechts von dem Eingang 18i sind alle Eingänge 18i+1 . . . im Zustand logisch "0". Entsprechend sind auch die Ausgänge aller ODER-Glieder 32i+1 . . . im Zustand logisch "0". Die Exklusive-ODER-Glieder 36i+1 . . . liefern also ebenfalls Ausgänge logisch "0". Der Ausgang des ODER-Glieds 32i war im Zustand logisch "1", und das gleiche gilt für die Ausgänge der links davon liegenden ODER-Glieder 32i−1 . . . An den Ausgängen 24i, 24i−1 . . . erscheinen daher jeweils die Komplemente der Signale an den Eingängen 18i, 18i−1 . . ., also des Inhalts der Speicherstellen, $u_i$, $u_{i-1}$ . . . des "u"-Registers 20. Liegt beispielsweise am Eingang 18i−1 der Zustand logisch "1", dann sind beide Eingänge des Exklusive-ODER-Gliedes 36i−1 im Zustand logisch "1". Der Ausgang des Exklusiv-ODER-Gliedes 36i−1 wird dadurch logisch "0".

An dem Exklusiv-ODER-Glied 34i liegt einmal der Ausgang des ODER-Glieds 32i+1 und zum anderen der Ausgang des ODER-Glieds 32i. Es war angenommen worden, daß alle Eingänge 18i+1 rechts von dem Eingang 18i im Zustand logisch "0" sind und Eingang 18i sich im Zustand logisch "1" befindet. In diesem Falle sind, wie oben erläutert wurde, der Ausgang des ODER-Glieds 32i sowie die Ausgänge sämtlicher links davon befindlichen ODER-Glieder 32i−1 . . . im Zustand logisch "1". Das Exklusiv-ODER-Glied 34i erhält daher an einem Eingang das Signal logisch "0" vom Ausgang des ODER-Gliedes 32i+1 und an dem anderen Eingang das Signal logisch "1" vom Ausgang des ODER-Glieds 32i. Sein Ausgang, der den Ausgang 28i der Logikschaltung 22 bildet, ist daher im Zustand logisch "1". Das Exklusiv-ODER-Glied 34i+1 erhält auf beide Eingänge die Signale logisch "0". Sein Ausgang ist ebenso wie die Ausgänge aller rechts davon liegenden ersten Exklusiv-ODER-Glieder im Zustand logisch "0". Alle links von dem Exklusiv-ODER-Glied 34i liegenden Exklusiv-ODER-Glieder 34i−1 . . . erhalten an beiden Eingängen die Zustände logisch "1". Auch deren Ausgänge sind daher im Zustand logisch "0".

Die Logikschaltung 22 liefert also an einem Ausgang ein Signal logisch "1". Dieser Ausgang entspricht demjenigen Eingang der Logikschaltung 22, der am weitesten rechts ein Signal logisch "1" erhält. Alle anderen Ausgänge . . . 28i−1 und 28i+1 . . . sind im Zustand logisch "0".

Die Logikschaltung 22 von Fig. 2 ermöglicht es, die Randpunkte eines segmentierten Objekts, zu bestimmen. Wenn das Objekt durch Bildpunkte dargestellt ist, die im Zustand logisch "1" sind, dann liefert die Logikschaltung 22 den Zustand logisch "1" an einem einzigen Ausgang, z.B. 28i, für welchen der nächste, rechts davon liegende Eingang 18i+1 und alle rechts von diesem liegende Eingänge im Zustand logisch "0" sind und der Eingang 18i im Zustand logisch "1" ist. Nur in diesem Falle ist nämlich der rechte Eingang des Exklusiv-ODER-Gliedes 34i im Zustand logisch "0" und der linke Eingang des Exklusiv-ODER-Gliedes 34i im Zustand logisch "1". Das "w"-Register 30 (Fig. 3) liefert somit für jede Zeile einen Randpunkt, wenn die betreffende Zeile in das "u"-Register 20 geladen wird.

Das "v"-Register 26 liefert links von diesem Randpunkt das Komplement des Inhalt des "u"-Registers 20. Rechts von dem Randpunkt sind nämlich die Ausgänge der ODER-Glieder 32i+1 jeweils im Zustand logisch "0". Links von dem Randpunkt sind die Ausgänge der ODER-Glieder 32i, 32i−1 ... im Zustand logisch "1". Infolgedessen liefern die Exklusiv-ODER-Glieder 36i, 36i−1 ... jeweils das Komplement der an den Eingänge 18i, 18i−1 ... anliegenden Zustände.

Das ist in Fig. 3 dargestellt. Das w-Register 30 enthält einen ersten rechten Randpunkt.

Um einen linken Randpunkt zu finden, wird der Inhalt des "v"-Registers 26 in das "u"-Register übertragen. In diesem Falle wird in dem "w"-Register 30 eine einzige Speicherstelle in den Zustand "logisch "1" gesetzt. Diese Speicherstelle entspricht dem rechten Rand des Restkomplements und liegt daher um eine Stelle links von dem linken Rand des Objekts. Bei Objekten mit einem "Loch" kann dieser Vorgang mehrfach wiederholt werden, bis schließlich keine Speicherstelle im "v"-Register 26 mehr gesetzt ist. Es sind dann alle Randpunkte des Objektes bestimmt, die innerhalb der untersuchten Zeile liegen.

Fig. 4 zeigt bei dem Beispiel von Fig. 3 den zweiten Schritt der Bestimmung des ersten linken Randes des Objekts.

Um aus der Integration einer Größe über das Innengebiet des Objekts ein Merkmal zu gewinnen, das zur Klassifikation des Objekts geeignet ist, ist ein (nicht dargestellter) Partialsummenspeicher vorgesehen. Dieser Partialsummenspeicher hat üblicherweise die Dimension des Bildspeichers. In dem Partialsummenspeicher ist für jede Zeile und Spalte der Bildmatrix die Partialsumme gespeichert, die sich aus der Summation der zu integrierenden Größe von linken Bildrand über die betreffende Zeile bis zur jeweiligen Spalte ergibt. Bezeichnet man mit F(i,k) die von dem Zeilen- und Spaltenindex abhängige Größe, dann ist die einem Bildelement mit dem Zeilenindex i und Spaltenindex j zugeordnete Partialsumme

$$P(i,j) = \sum_{k=1}^{k=j} F(i,k).$$

Wenn diese Partialsummen in dem Partialsummenspeicher gespeichert und über den Zeilenindex i und den Spaltenindex j adressierbar sind, dann kann nach Bestimmung der Randelemente eines Objekts mit einer Logikschaltung 22 nach Fig. 2 und dem unter Bezugnahme auf Fig. 3 und 4 erläuterten Verfahren die Integration bzw. Summation der besagten Größe über die Fläche des Objekts zurückgeführt werden auf eine Differenzbildung von Partialsummen. Dadurch kann die Rechenzeit wesentlich verringert werden. Wichtig ist dabei, daß in jeder Zeile beginnend mit dem äußersten rechten Randelement und der positiv zu nehmenden, zugeordneten Partialsumme die Partialsummen mit abwechselndem Vorzeichen summiert werden.

Bei vielen Anwendungen ist nur eine geometrische Merkmalsbestimmung vorgesehen. Dazu werden bestimmte Momente berechnet. Die Partialsummen dieser Momente sind einmal ermittelte feste Größen. Im Gegensatz zu den intensitätsabhängigen Größen brauchen sie nicht im Rahmen der Signalvorverarbeitung jedesmal neu berechnet zu werden. Sie können deshalb in einen ROM abgespeichert sein.

Einige dieser Momente hängen nicht vom Zeilenindex ab. In diesem Fall lassen sich die Partialsummen in einem Vektor abspeichern, dessen Komponenten allein vom Spaltenindex adressiert werden. Die Anzahl der im Objekt vorhandenen Bildpunkte erhält man direkt durch Addition und Subtraktion der Spaltenindizes, ohne daß man dazu spezielle Partialsummen benötigt.

Von großem Interesse sind auch intensitätsabhängige Größen wie die mittlere Intensität und die Varianz. Die mit diesem Größen gebildeten Partialsummen werden zweckmäßigerweise von der Signalvorverarbeitung "Online" berechnet und abgespeichert. Hierzu werden spezielle Akkumulatoren jeweils zu Beginn einer Zeilenabtastung auf null zurückgesetzt. Man läßt dann die intensitätsabhängigen Partialsummen in den Akkumulatoren auflaufen und speichert den Inhalt der Akkumulatoren gleichzeitig in die jeweiligen Partialsummenspeicher ab. Wie man am Beispiel der mittleren Intensität und der Varianz sieht, kann durch dieses Verfahren der für die Partialsummenberechnung notwendige Aufwand sehr gering gehalten werden. Im Falle der mittleren Intensität braucht die vom AD-Wandler einlaufende Information nur auf addiert und parallel dazu abgespeichert zu werden. Im Falle der Varianz muß eine Quadrierung der Grauwertinformation zwischengeschaltet werden.

## Patentansprüche

1. Schaltungsanordnung für die Objekterkennung aus einem aus Zeilen und Spalten zusammengesetzten Binärbild, wobei den Bildelementen geometrische oder physikalische Größen zugeordnet sind und diese Größen über die Fläche des Objekts hinweg aufsummiert werden, und wobei die Summation Zahlenwerte ergibt, die als Merkmal des Objekts einer Zuordnung des Objekts zu einer Klasse von Objekten dienen, mit

(a) einem ersten Register (20), in welchem die Bildinformationen einer zu verarbeitenden Zeile des Binärbildes speicherbar sind,

(b) einer festverdrahteten Logikschaltung (22) mit einer Folge von Eingängen (18i−1, 18i, 18+1), die mit je einem Speicherplatz des ersten Registers (20) verbunden sind, und einer Folge von den Eingängen (18i−1, 18i, 18i+1) zugeordneten Ausgängen (28i−1, 28i, 28i+1), bei welcher die Eingänge und die Ausgänge über logische Operatoren (32i−1, 32i, 32i+1; 34i−1, 34i, 34i+1; 36i−1, 36i, 36i+1) zur Bestimmung derjenigen Bildelemente miteinander verknüpft sind, welche die Kontur des der Bildinformation zugehörigen Objekts begrenzen,

(c) einem zweiten Register (30), dessen Speicherplätze mit je einem der Ausgänge (28i−1, 28i, 28i+1) der Logikschaltung (22) verbunden sind,

(d) einem Speicher, in welchem für jedes betrachtete Bildelement die Partialsumme einer der besagten Größen über die Bildelemente der zugehörigen Zeile von einem Rand des Bildes bis zu dem betrachteten Bildelement gespeichert ist, und

(e) Additionsmitteln zum Addieren der den konturenbegrenzenden Bildelementen aus dem zweiten Register (30) zugeordneten, gespeicherten Partialsummen für jede Zeile mit innerhalb einer Zeile bei jedem konturen begrenzenden Bildelement wechselndem Vorzeichen.

2. Schaltungsanordnung nach Anspruch 1, dadurch gekennzeichnet, daß

(a) die Logikschaltung (22) eine zweite Folge von Ausgängen (24i−1, 24i, 24i+1) aufweist,

(b) an der besagten, ersten, Folge von Ausgängen (28i−1, 28i, 28i+1) durch die Logikschaltung (22) ein von einem ersten Rand des Bildes her gesehen konturenbegrenzendes Bildelement zur Speicherung in dem zweiten Register (30) durch ein binäres Signal markierbar ist,

(c) an der zweiten Folge von Ausgängen (24i−1, 24i, 24i+1) ausgehend von dem konturenbegrenzenden Bildelement auf der dem ersten Rand zugehörigen Seite der Zeile kein objektanzeigendes Signal auftritt und auf der dem zweiten Rand des Bildes zugehörigen Seite an jedem Ausgang (24i−1, 24i, 24i+1) der zweiten Folge von Ausgängen jeweils ein zu dem Signal an dem betreffenden Eingang (18i−1, 18i, 18i+1) inverses Signal auftritt,

(d) ein drittes Register (26) vorgesehen ist, dessen Speicherstellen mit den Ausgängen (24i−1, 24i, 24i+1) der zweiten Folge von Ausgängen der Logikschaltung (22) verbunden sind, und

(e) der Inhalt des dritten Registers (26) in einem weiteren Bildverarbeitungszyklus in das erste Register (20) übertragbar ist, so daß an den ersten Ausgängen (28i−1, 28i, 28i+1) und in dem zweiten Register (30) das von der dem zweiten Rand des Bildes zugehörigen Seite her konturenbegrenzende Bildelement markiert wird.

**Revendications**

1. Disposition de circuit pour l'identification d'objets à partir d'une image binaire composée de lignes et de colonnes, des grandeurs physiques ou géometriques étant associées aux éléments d'image et ces grandeurs étant additionnées sur la surface de l'objet, et l'addition donnant des valeurs numériques qui en tant que caractéristique de l'objet sont déstinées à l'association de l'objet à une classe d'objets, ayant

(a) un premier registre (20) dans lequel les informations d'image d'une ligne de l'image binaire à traiter peuvent être mémorisées,

(b) un circuit logique câblé (22) ayant une séquence d'entrées (18i−1, 18i, 18i+1) reliées chacune à un emplacement de mémoire du premier registre (20), et une séquence de sorties (28i−1, 28i, 28i+1) associées aux entrées (18i−1, 18i, 18i+1), dans lequel les entrées et les sorties sont enchaînées par des opérateurs logiques (32i−1, 32i, 32i+1, 34i−1, 34i, 34i+1; 36i−1, 36i, 36i+1) pour la détermination de ces éléments d'image qui limitent le contour de l'objet associé à l'information d'image,

(c) un second registre (30) dont chaque emplacement de mémoire est relié à l'une des sorties (28i−1, 28i, 28i+1) du circuit logique (22),

(d) une mémoire dans laquelle pour chaque élément d'image observé, la somme partielle de l'une desdites grandeurs des éléments d'image de la ligne associée est mémorisée d'un bord de l'image à l'élément d'image observé, et

(e) des moyens d'addition déstinés à additionner les sommes partielles mémorisées associées aux éléments d'image limitant le contour du second registre (30) pour chaque ligne avec le signe changant à chaque élément d'image limitant le contour.

2. Disposition de circuit selon la revendication 1, caractérisée par le fait que

(a) le circuit logique (22) a une seconde séquence de sorties (24i−1, 24i, 24i+1),

(b) à ladite première séquence de sorties (28i−1, 28i, 28i+1), un signal binaire peut marquer un élément d'image limitant le contour vu du premier bord de l'image, par le circuit logique (22), pour la mémorisation dans le second registre (30),

(c) aucun signal indicant l'objet n'apparaît à la seconde séquence de sorties (24i−1, 24i, 24i+1) partant de l'élément d'image limitant le contour sur le côté de la ligne associée au premier bord, et un signal à la fois qui est inverse au signal à l'entrée concernée (18i−1, 18i, 18i+1) apparaît sur le côté associé au second bord de l'image à chaque sortie (24i−1, 24i, 24i+1) de la seconde séquence de sorties,

(d) est prévu un troisième registre (26), dont les emplacements de mémoire sont reliés aux sorties (24i−1, 24i, 24i+1) de la seconde séquence de sorties du circuit logique (22), et

(e) le contenu du troisième registre (26) peut être transmis dans le premier registre (20) dans un autre cycle de traitement d'image de sorte que l'élément d'image limitant le contour de la seconde direction est marqué aux premières sorties (28i−1, 28i, 28i+1) et dans le second registre (30).

**Claims**

1. Circuit arrangement for the object identification from a binary picture composed of lines and columns, with geometrical or physical quantities being associated with the picture elements and those quantities being added up over the surface of the object, and with the summation resulting in numerical values which as characteristic of the object serve to associate the object with a class of objects, having

(a) first register (20) which is arranged to store the picture information of a line of the binary picture to be processed,

(b) a hardwired logic (22) having a sequence of inputs ($18i-1$, $18i$, $18i+1$) each of which is connected to an associated memory location of the first register (20), and a sequence of outputs ($28i-1$, $28i$, $28i+1$) associated with the inputs and the outputs are interconnected through logical operators ($32i-1$, $32i$, $32i+1$) for determining those picture elements which limit the contour of the object associated with the picture information,

(c) a second register (30), each memory location of which is connected to an associated one of the outputs ($28i-1$, $28i$, $28i+1$) of the logic (22),

(d) a memory in which, for each observed picture element, the partial sum of one of said quantities of the picture elements of the associated line is stored from one border of the picture to the observed picture element, and

(e) adding means for adding the stored partial sums associated with picture elements limiting the contour from the second register (30) for each line with the sign changing within one line at each contour-limiting picture element.

2. Circuit arrangement as set forth in claim 1, characterized in that

(a) the logic (22) has a second sequence of outputs ($24i-1$, $24i$, $24i+1$),

(b) the logic (22) is adapted to mark by a binary signal, at said first sequence of outputs ($28i-1$, $28i$, $28i+1$), a picture element, which is contour-limiting as viewed from a first border of the picture, for storing in a second register (30),

(c) at the second sequence of outputs ($24i-1$, $24i$, $24i+1$), no object-indicating signal occurs starting from the picture element limiting the contour on the side of the line associated with the first border, and on the side associated with the second border of the picture a signal inverse to the signal at the respective input ($18i-1$, $18i$, $18i+1$) occurs at each output ($24i-1$, $24i$, $24i+1$) of the second sequence of outputs,

(d) a third register (26) is provided, the memory locations of which are connected to the outputs ($24i-1$, $24i$, $24i+1$) of the second sequence of outputs of the logic (22), and

(e) the contents of the third register (26) is transferred into the first register (20) in a further picture processing cycle such that the picture element limiting the contour from the side associated with the second border of the picture is marked at the first outputs ($28i-1$, $28i$, $28i+1$) and in the second register (30).

*Fig.1*

*Fig.3*

*Fig.4*

Fig. 2

EP 0 195 281 B1